# EUROPÄISCHE PATENTANMELDUNG

(11) **EP 4 477 450 A1**
(43) Veröffentlichungstag der Anmeldung: **18.12.2024**
(21) Anmeldenummer: 24178371.1
(22) Anmeldetag: 28.05.2024
(51) Int. Cl.: B60L 5/20, B60L 5/22, B60L 5/28

(54) **STROMABNEHMER FÜR EIN ELEKTRISCH ODER HYBRIDELEKTRISCH ANGETRIEBENES FAHRZEUG UND EIN MIT EINEM SOLCHEN AUSGESTATTETES FAHRZEUG**

(30) Priorität: 15.06.2023 DE 102023205573
(71) Anmelder: Siemens Mobility GmbH, 81739 München (DE)
(72) Erfinder: Büttner, Max, 10367 Berlin (DE); Blase, Bastian, 13156 Berlin (DE); Tolksdorf, Andre, 12555 Berlin (DE)
(74) Vertreter: Siemens Patent Attorneys

(57) **Zusammenfassung**

Die Erfindung betrifft einen Stromabnehmer (1) für ein Fahrzeug zur Einspeisung von Traktionsenergie während der Fahrt aus einem Fahrdraht (2) einer längs der Fahrstrecke installierten Oberleitungsanlage. Er umfasst wenigstens eine sich parallel zu einer Fahrzeugquerrichtung (Y) erstreckende Schleifleiste (3) und ein aufrichtbares Traggestell (6) mit einem Basisgelenk zur Abstützung des Traggestells (6) auf dem Fahrzeug und mit einer Gelenkanordnung (7) mit wenigstens einer parallel zur Fahrzeugquerrichtung (Y) verlaufenden Drehachse (D) zur drehbaren Lagerung der wenigstens einen Schleifleiste (3) auf dem Traggestell (6). Eine Hubvorrichtung dient zum Aufrichten des Traggestells (6) und zum Erzeugen einer Kontaktkraft (FK), mit welcher die wenigstens eine Schleifleiste (3) zur Ausbildung eines elektrischen Schleifkontakts gegen den Fahrdraht (2) andrückbar ist. Erfindungsgemäß ist die wenigstens eine Drehachse (D) relativ zu der wenigstens einen Schleifleiste (3) derart angeordnet, dass im Schleifkontakt zum Fahrdraht (2) ein durch eine Reibungskraft (FR) auf die wenigstens eine Schleifleiste (3) eingeprägtes Kippmoment (MK) durch ein gegenläufiges, durch die Kontaktkraft (FK) auf die wenigstens eine Schleifleiste (3) eingeprägtes Gegenmoment (MG) ausgleichbar ist. Hierdurch kann der Verschleiß des Stromabnehmers (1) reduziert werden.

## Beschreibung

Die Erfindung bezieht sich auf einen Stromabnehmer für ein elektrisch oder hybridelektrisch angetriebenes Fahrzeug nach dem Oberbegriff des Patentanspruches 1 sowie auf ein mit einem solchen Stromabnehmer ausgestattetes Fahrzeug nach Patentanspruch 5.

Derartige Stromabnehmer sind zur Einspeisung von Traktionsenergie in ein elektrisch oder hybridelektrisch angetriebenes Fahrzeug, insbesondere in schwere Nutzfahrzeuge wie Lastkraftwagen oder Busse, während der Fahrt entlang einer Fahrstrecke aus einem Fahrdraht einer längs der Fahrstrecke installierten elektrischen Oberleitungsanlage vorgesehen. Ein solcher Stromabnehmer umfasst wenigstens eine länglich ausgebildete, sich parallel zu einer Fahrzeugquerrichtung erstreckende Schleifleiste, welche bezüglich einer Fahrzeughochrichtung eine nach oben gewandte Kontaktfläche aufweist. Ferner umfasst ein solcher Stromabnehmer ein aufrichtbares Traggestell mit einem Basisgelenk zur Abstützung des Traggestells auf dem Fahrzeug und mit einer Gelenkanordnung mit wenigstens einer parallel zur Fahrzeugquerrichtung verlaufenden Drehachse zur drehbaren Lagerung der wenigstens einen Schleifleiste auf dem Traggestell. Des Weiteren umfasst ein solcher Stromabnehmer eine Hubvorrichtung, die dazu ausgebildet ist, das Traggestell aufzurichten, wobei die wenigstens eine Schleifleiste aus einer unteren Ruheposition in eine obere Kontaktposition fährt. Die Hubvorrichtung ist ferner dazu ausgebildet, eine Kontaktkraft zu erzeugen, mit welcher die wenigstens eine Schleifleiste in ihrer Kontaktposition gegen den Fahrdraht gedrückt wird, um während der Fahrt einen elektrischen Schleifkontakt zwischen der wenigstens einen Schleifleiste und dem Fahrdraht zur Übertragung von elektrischer Energie aus der Oberleitungsanlage in einen fahrzeugseitigen Traktionsantrieb und/oder einen fahrzeugseitigen Energiespeicher auszubilden.

Aus der Patentschrift EP 3 571 086 B1 ist ein derartiger Stromabnehmer für eine zweipolige Oberleitungsanlage bekannt. Das pantographenartige Traggestell umfasst einen auf einem Basisgelenk schwenkbar montierten Unterarm und zwei relativ zueinander schwenkbar am Unterarm montierte Oberarme. Die Oberarme tragen je eine Kontaktwippe mit jeweils zwei hintereinander angeordneten Schleifleisten. Das Traggestell kann durch ein geeignetes Drehmoment am Unterarm aufrichtet werden, wobei die Oberarme zwangsweise durch eine Koppelstange und zwei Zugstangen aufgerichtet werden, bis sich die Kontaktwippen an die Fahrdrähte anlegen, um einen elektrischen Kontakt zwischen dem Stromabnehmer und den beiden Fahrdrähten der Oberleitungsanlage herzustellen. Dabei ist jede der Kontaktwippen über je eine Wippengelenk mit parallel zur Fahrzeugquerrichtung verlaufender Drehachse drehbar mit dem jeweiligen Oberarm verbunden. Die Drehachse jeder Kontaktwippe liegt dabei bezüglich einer Fahrzeuglängsrichtung mittig zwischen den Schleifleisten und bezüglich einer Fahrzeughochrichtung unterhalb der beiden Schleifleisten.

Aus der Offenlegungsschrift DE 10 2020 211 775 A1 ist ein Stromabnehmer für ein elektrisch oder hybridelektrisch angetriebenes Straßenfahrzeug bekannt, der zur Einspeisung von Traktionsenergie aus einer zweipoligen, je Kontaktpol einen Fahrdraht aufweisenden Oberleitungsanlage ausgebildet und vorgesehen ist. Der Stromabnehmer umfasst ein aufrichtbares Traggestänge, welches sich fahrzeugseitig auf einer Gestängebasis gelenkig abstützt und fahrdrahtseitig eine Wippenanordnung trägt. Die Wippenanordnung weist dabei je Kontaktpol ein Wippengestell auf. Jedes Wippengestell ist gelenkig, um jeweils eine Fahrzeugquerachse drehbar mit dem Traggestänge verbunden. Das Traggestänge weist je Kontaktpol einen aufrichtbaren Tragarm auf. Jeder Tragarm hat einen sich an der Gestängebasis abstützenden Unterarm, einen mit dem Unterarm gelenkig verbundenen und das jeweilige Wippengestell tragenden Oberarm. Je eine Koppelstange ist mit Oberarm und Gestängebasis derart gelenkig verbunden, dass beim Aufrichten eines Tragarms dessen Oberarm relativ zum Unterarm gestreckt wird. Je eine Führungsstange ist mit Unterarm und Wippengestell derart gelenkig verbunden, dass beim Aufrichten des Tragarms das Wippengestell so geführt ist, dass eine auf dem Wippengestell gelagerte Schleifleiste dem Fahrdraht zugewandt bleibt. Auf jedem der Wippengestelle ist dabei genau eine, parallel zur Fahrzeugquerachse angeordnete Schleifleiste zur elektrischen Kontaktierung des dem Kontaktpol zugeordneten Fahrdrahtes gelagert. Die Drehachsen der das jeweilige Wippengestell mit seinem Oberarm gelenkig verbindet, liegt bezüglich einer Fahrzeuglängsrichtung mittig zur und bezüglich einer Fahrzeughochrichtung unterhalb der Schleifleiste.

Durch die während des Betriebs an einer Schleifleiste angreifenden Kräfte und insbesondere bei zur Fahrbahnoberfläche geneigter Fahrdrahtlage kann es bei den bekannten Stromabnehmers zu einer in Fahrdrahtrichtung ungleichmäßigen Abnutzung einer Schleifleiste kommen. Typischerweise ist die Vorderkante der Kontaktfläche der Schleifleiste stärker abgenutzt als deren Hinterkante. Anstelle der vorgesehenen linearen Auflage kann es zu einer punktförmigen Auflage des Fahrdrahtes auf die Kontaktfläche kommen, was im Betrieb zu einer erhöhten Stromdichte mit der Gefahr von Verschleiß fördernden Plasmablitzen führen kann.

Der Erfindung liegt daher die Aufgabe zugrunde, einen Stromabnehmer der eingangs genannten Art mit einem verbesserten Verschleißverhalten seiner Schleifleiste beziehungsweise Schleifleisten bereitzustellen.

Die Erfindung löst die Aufgabe durch einen gattungsgemäßen Stromabnehmer mit den im kennzeichnenden Teil des Patentanspruches 1 angegebenen Merkmalen.

Die Erfindung geht demnach aus von einem Stromabnehmer, der zur Einspeisung von Traktionsenergie in ein elektrisch oder hybridelektrisch angetriebenes Fahrzeug während der Fahrt entlang einer Fahrstrecke aus einem Fahrdraht einer längs der Fahrstrecke installierten elektrischen Oberleitungsanlage vorgesehen ist. Das Fahrzeug ist insbesondere ein schweres Nutzfahrzeug, etwa ein Lastkraftwagen oder ein Bus, kann aber auch ein Schienenfahrzeug sein.

Ein solcher Stromabnehmer umfasst wenigstens eine länglich ausgebildete, sich parallel zu einer Fahrzeugquerrichtung erstreckende Schleifleiste, welche bezüglich einer Fahrzeughochrichtung eine nach oben gewandte Kontaktfläche aufweist. Je nach Ausgestaltung können eine, zwei oder mehrere Schleifleisten für jeden Fahrdraht einer ein- oder mehrpoligen Oberleitungsanlage vorgesehen sein. Jede Schleifleiste kann ein eine etwa streifenförmige Kontaktfläche aufweisendes Schleifstück aus Graphit oder Kupfer aufweisen, das in einem Schleifstückhalter befestigt ist.

Ferner umfasst ein solcher Stromabnehmer ein aufrichtbares Traggestell mit einem Basisgelenk zur Abstützung des Traggestells auf dem Fahrzeug und mit einer Gelenkanordnung mit wenigstens einer parallel zur Fahrzeugquerrichtung verlaufenden Drehachse zur drehbaren Lagerung der wenigstens einen Schleifleiste auf dem Traggestell. Das Traggestell kann beispielsweise Tragarme aufweisen, die nach Art eines Pantographen aufstellbar sind und sich über das Basisgelenk an einer tragenden Struktur des Fahrzeugs abstützen.

Des Weiteren umfasst ein solcher Stromabnehmer eine Hubvorrichtung, die dazu ausgebildet ist, das Traggestell aufzurichten, wobei die wenigstens eine Schleifleiste aus einer unteren Ruheposition in eine obere Kontaktposition fährt. Inder unteren Ruheposition kann der Stromabnehmer in einem Dachbereich des Fahrzeugs abgelegt sein, so dass die zulässigen Fahrzeugabmessungen für nicht elektrifizierte Fahrstrecken eingehalten werden können. Die Hubvorrichtung ist ferner dazu ausgebildet, eine Kontaktkraft zu erzeugen, mit welcher die wenigstens eine Schleifleiste in ihrer oberen Kontaktposition gegen den Fahrdraht gedrückt wird, um während der Fahrt einen elektrischen Schleifkontakt zwischen der wenigstens einen Schleifleiste und dem Fahrdraht zur Übertragung von elektrischer Energie aus der Oberleitungsanlage in einen fahrzeugseitigen Traktionsantrieb und/oder einen fahrzeugseitigen Energiespeicher auszubilden.

Erfindungsgemäß ist die wenigstens eine Drehachse relativ zu der wenigstens einen Schleifleiste derart angeordnet, dass im Schleifkontakt zum Fahrdraht ein durch eine Reibungskraft auf die wenigstens eine Schleifleiste eingeprägtes Kippmoment durch ein gegenläufiges, durch die Kontaktkraft auf die wenigstens eine Schleifleiste eingeprägtes Gegenmoment ausgleichbar ist. Gemäß der Erfindung wurde erkannt, dass die Kontaktkraft zwischen der Kontaktfläche der wenigstens einen Schleifleiste und dem Fahrdraht eine gegen die Fahrtrichtung des Fahrzeugs wirkende Reibungskraft erzeugt, die aufgrund der wenigstens einen, unterhalb der Kontaktfläche angeordneten Drehachse der Gelenkanordnung ein Kippmoment auf die wenigstens eine Schleifleiste einprägt. Erfindungsgemäß ist nun die wenigstens eine Drehachse bezüglich der Fahrzeuglängsrichtung nicht mehr symmetrisch zu der wenigstens einen Schleifleiste, sondern derart unsymmetrisch angeordnet, dass die Kontaktkraft ein dem Kippmoment gegenläufiges Gegenmoment auf die wenigstens eine Schleifleiste einprägt. Die Lage der wenigstens einen Drehachse ist dabei so zu der wenigstens einen Schleifleiste bemessen, dass die Summe aus Kippmoment und Gegenmoment gering ausfällt oder verschwindet. Durch das gering gehaltene Gesamtmoment wird die Kontaktfläche der wenigstens eine Schleifleiste parallel zum Fahrdraht gehalten, was den Verschleiß des Schleifstückes der Schleifleiste vergleichmäßigt.

In einer vorteilhaften Ausführungsform umfasst der erfindungsgemäße Stromabnehmer genau eine Schleifleiste, wobei die Gelenkanordnung genau eine Drehachse aufweist, die relativ zur Schleifleiste bezüglich der Fahrzeughochrichtung unterhalb ihrer Kontaktfläche und bezüglich einer Fahrzeuglängsrichtung in Fahrtrichtung des Fahrzeugs hinter einer Wirkungslinie einer aus der Kontaktkraft zwischen Fahrdraht und Kontaktfläche resultierenden Gesamtkraft angeordnet ist. Die Kontaktkraft zwischen der Schleifleiste und dem Fahrdraht wird über eine linienförmige Auflagefläche des Fahrdrahtes auf der Kontaktfläche vermittelt. Jeder auf ein Linienelement der Auflagefläche wirkende Kontaktkraftanteil prägt einen Drehmomentanteil auf die Schleifleiste ein, welche über die Auflagelinie aufintegriert das Kippmoment ergeben. Ersatzweise kann eine resultierende Kontaktkraft und deren Wirkungslinie ermittelt werden, die dasselbe Kippmoment einprägt. Die Drehachse der Gelenkanordnung ist nun so weit hinter dieser Wirkungslinie angeordnet, dass sich das Reibungskraftbedingte Kippmoment und das Kontaktkraft-bedingte Gegenmoment ausgleichen.

In einer weiteren vorteilhaften Ausführungsform umfasst der erfindungsgemäße Stromabnehmer zwei in Fahrtrichtung hintereinander angeordnete Schleifleisten, wobei die Gelenkanordnung genau eine Drehachse aufweist, die bezüglich der Fahrzeuglängsrichtung zwischen den zwei Schleifleisten angeordnet ist, wobei die Drehachse relativ zu den Schleifleisten bezüglich der Fahrzeughochrichtung unterhalb ihrer Kontaktflächen und bezüglich einer Fahrzeuglängsrichtung näher an der in Fahrtrichtung des Fahrzeugs hinteren Schleifleiste als an der vorderen Schleifleiste angeordnet ist. Die zwei Schleifleisten können auf einer gemeinsamen Kontaktwippe in gegenseitig fester Lage angeordnet sein, die über die Gelenkanordnung mit dem Traggestell verbunden ist. Die Kontaktflächen der beiden Schleifleisten liegen dabei in einer gemeinsamen Kontaktebene. Das Kippmoment wird hier durch die Reibungskräfte zwischen beiden Schleifleisten und dem Fahrdraht erzeugt, während das Gegenmoment sich aus zwei gegenläufigen Drehmomenten zusammensetzt. Ein erstes Drehmoment wird durch die auf die vordere Schleifleiste wirkende Kontaktkraft erzeugt, während ein zweites gegensinniges Drehmoment durch die auf die hintere Schleifleiste wirkende Kontaktkraft erzeugt wird. Indem die hintere Schleifleiste näher an der Drehachse liegt als die vordere Schleifleiste, überwiegt das erste Drehmoment das zweite Drehmoment und resultiert in Summe in einem Gegenmoment, welches das Kippmoment ausgleicht.

In einer weiteren vorteilhaften Aufführungsform umfasst der erfindungsgemäße Stromabnehmer zwei in Fahrtrichtung hintereinander angeordnete Schleifleisten. Dabei weist die Gelenkanordnung ein auf dem Traggestell gelagertes Basiselement mit einer ersten Drehachse und einer in festem Abstand dazu angeordneten zweiten Drehachse, ein um die erste Drehachse drehbar an das Basiselement angelenktes, vorderes Schenkelelement, ein um die zweite Drehachse drehbar an das Basiselement angelenktes, hinteres Schenkelelement, und ein die zwei Schleifleisten tragendes Tragelement mit einer dritten Drehachse und einer in festem Abstand dazu angeordneten vierten Drehachse auf. Dabei sind das vordere Schenkelelement um die dritte Drehachse und das hintere Schenkelelement um die vierte Drehachse jeweils drehbar an das Tragelement angelenkt. Der Abstand zwischen dritter Drehachse und vierter Drehachse ist kleiner als der Abstand zwischen erster Drehachse und zweiter Drehachse. In dieser Ausführungsform bilden das Basiselement, das Tragelement und die beiden Schenkelelemente ein so genanntes Viergelenk. Die auf die Kontaktflächen der Schleifleisten wirkende Reibungskraft bewirkt ein Kippmoment auf die Schleifleisten, welches das vordere Schenkelement um die erste Drehachse und das hintere Schenkelelement um die zweite Drehachse entgegen die Fahrtrichtung rotieren lässt. Hierdurch neigt sich das Tragelement, so dass sich die vordere Schleifleiste absenkt und die hintere Schleifleiste anhebt, wodurch die vordere Schleifleiste gegenüber der hinteren Schleifleiste entlastet wird. Die auf vordere Schleifleiste und hintere Schleifleiste unterschiedlich großen Kontaktkräfte erzeugen nun ein Gegenmoment, welches bestrebt ist, das Tragelement mit den Schleifleisten in eine zum Fahrdraht parallele Lage zu drehen. Durch die Anordnung der Schleifleisten relativ zu den Drehachsen und durch geeignete Längenbemessung der Elemente des Viergelenks kann ein das Kippmoment ausgleichendes Gegenmoment erzeugt werden.

Die Aufgabe wird ferner gelöst durch ein elektrisch oder hybridelektrisch angetriebenes Fahrzeug, insbesondere ein schweres Nutzfahrzeug, mit einem Stromabnehmer nach einem der Ansprüche 1 bis 4. Dabei kann das Fahrzeug ein Straßenfahrzeug, etwa eine Sattelzugmaschine oder ein Bus, oder auch ein Schienenfahrzeug, etwa ein Triebzug oder eine Lokomotive, sein.

Weitere Eigenschaften und Vorteile der Erfindung ergeben sich aus nachfolgender Beschreibung von Ausführungsbeispielen anhand der Zeichnungen, in deren
- FIG 1: ein erstes Ausführungsbeispiel des erfindungsgemäßen Stromabnehmers mit einer Schleifleiste,
- FIG 2: ein zweites Ausführungsbeispiel des erfindungsgemäßen Stromabnehmers mit zwei Schleifleisten,
- FIG 3: ein drittes Ausführungsbeispiel des erfindungsgemäßen Stromabnehmers mit zwei Schleifleisten in einem ersten Bewegungszustand,
- FIG 4: das dritte Ausführungsbeispiel in einem zweiten Bewegungszustand,
- FIG 5: das erste Ausführungsbeispiel in einer Seitenansicht und
- FIG 6: das erste Ausführungsbeispiel in einer Frontansicht schematisch erläutert sind.

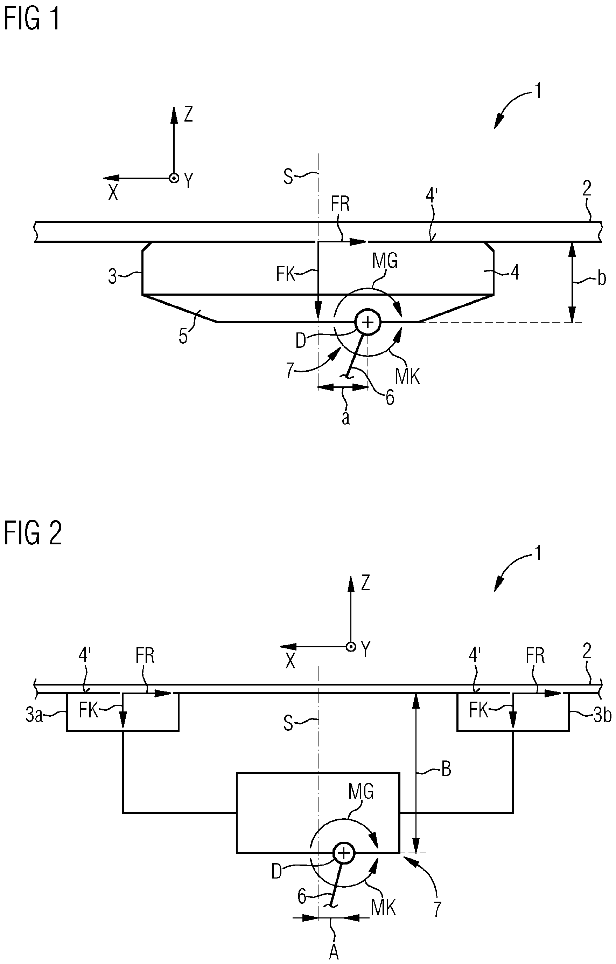

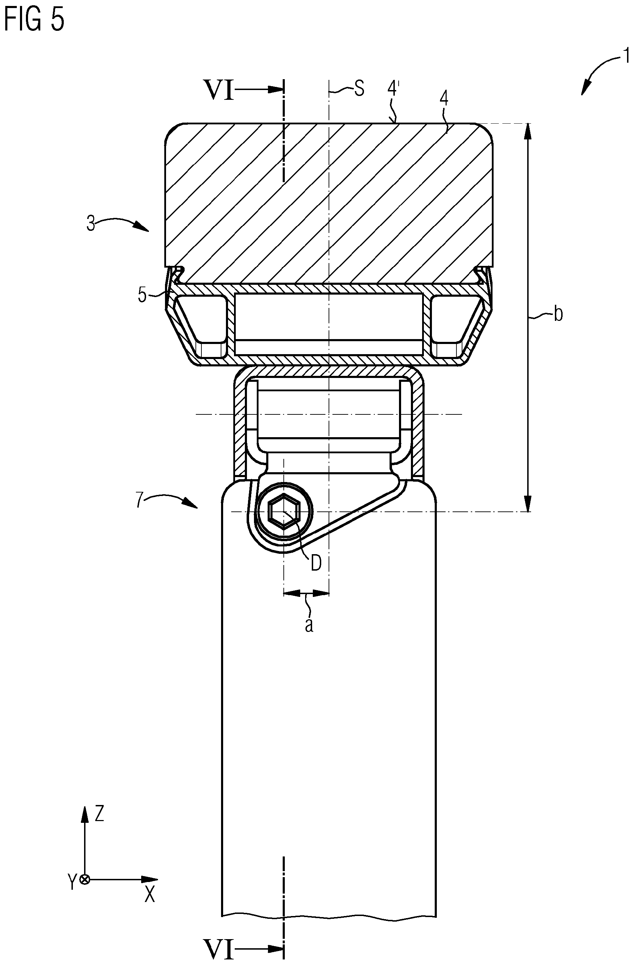

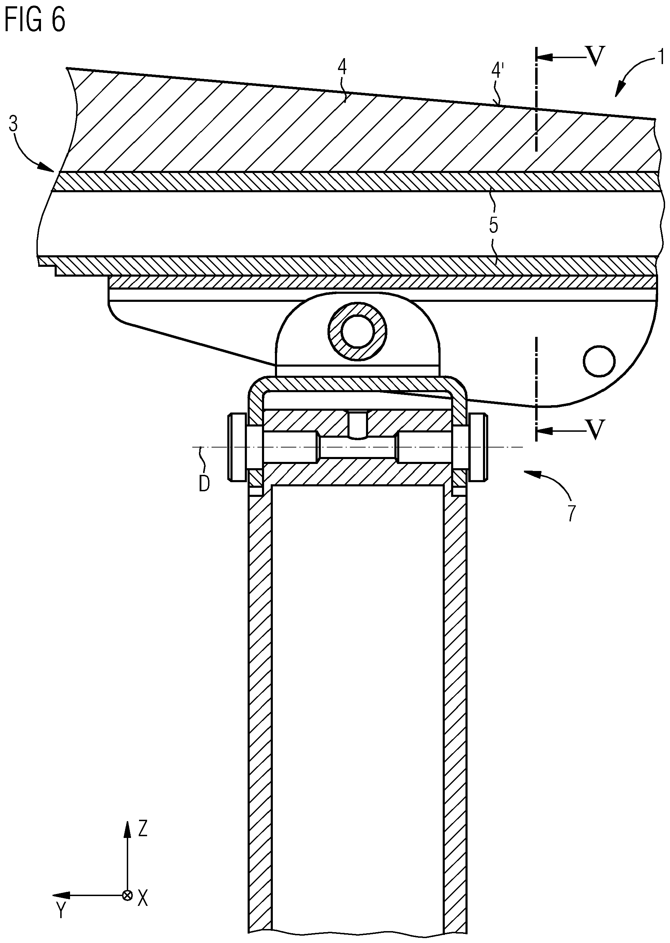

Ein Stromabnehmer 1 gemäß FIG 1 bis FIG 6 dient der Einspeisung von Traktionsenergie in ein elektrisch oder hybridelektrisch angetriebenes Fahrzeug während der Fahrt entlang einer Fahrstrecke aus einem Fahrdraht 2 einer längs der Fahrstrecke installierten elektrischen Oberleitungsanlage. Das nicht dargestellte Fahrzeug kann insbesondere ein schweres Nutzfahrzeug, etwa ein Lastkraftwagen oder ein Bus, aber auch ein Schienenfahrzeug sein.

Ein solcher Stromabnehmer 1 umfasst wenigstens eine länglich ausgebildete, sich parallel zu einer Fahrzeugquerrichtung Y erstreckende Schleifleiste 3, welche bezüglich einer Fahrzeughochrichtung Z eine nach oben gewandte Kontaktfläche 4' aufweist. Je nach Ausgestaltung können eine, zwei oder mehrere Schleifleisten 3 für jeden Fahrdraht 2 einer ein- oder mehrpoligen Oberleitungsanlage vorgesehen sein. Jede Schleifleiste 3 kann ein Schleifstück 5 aus Graphit oder Kupfer aufweisen, das in einem Schleifstückhalter 5 befestigt ist und eine etwa streifenförmige Kontaktfläche 4' aufweist.

Ferner umfasst ein solcher Stromabnehmer 1 ein aufrichtbares Traggestell 6 mit einem Basisgelenk zur Abstützung des Traggestells 6 auf dem Fahrzeug und mit einer Gelenkanordnung 7 mit wenigstens einer parallel zur Fahrzeugquerrichtung Y verlaufenden Drehachse D zur drehbaren Lagerung der wenigstens einen Schleifleiste 3 auf dem Traggestell 6. Das Traggestell 6 kann beispielsweise Tragarme aufweisen, die nach bekannter Art eines Pantographen aufstellbar sind und sich über das Basisgelenk an einer tragenden Struktur des Fahrzeugs abstützen.

Des Weiteren umfasst ein solcher Stromabnehmer 1 eine nicht näher dargestellte Hubvorrichtung, die dazu ausgebildet ist, das Traggestell 6 aufzurichten, wobei die wenigstens eine Schleifleiste 3 aus einer unteren Ruheposition in eine obere Kontaktposition fährt. In der unteren Ruheposition kann der Stromabnehmer 1 in einem Dachbereich des Fahrzeugs abgelegt sein, so dass die zulässigen Fahrzeugabmessungen für nicht elektrifizierte Fahrstrecken eingehalten werden können. Die Hubvorrichtung ist ferner dazu ausgebildet, eine Kontaktkraft FK zu erzeugen, mit welcher die wenigstens eine Schleifleiste 3 in ihrer oberen Kontaktposition gegen den Fahrdraht 2 gedrückt wird, um während der Fahrt einen elektrischen Schleifkontakt zwischen der wenigstens einen Schleifleiste 3 und dem Fahrdraht 2 zur Übertragung von elektrischer Energie aus der Oberleitungsanlage in einen fahrzeugseitigen Traktionsantrieb und/oder einen fahrzeugseitigen Energiespeicher auszubilden.

Erfindungsgemäß ist die wenigstens eine Drehachse D relativ zu der wenigstens einen Schleifleiste 3 derart angeordnet, dass im Schleifkontakt zum Fahrdraht 2 ein durch eine Reibungskraft FR auf die wenigstens eine Schleifleiste 3 eingeprägtes Kippmoment MK durch ein gegenläufiges, durch die Kontaktkraft FK auf die wenigstens eine Schleifleiste 3 eingeprägtes Gegenmoment MG ausgleichbar ist. Gemäß der Erfindung wurde erkannt, dass die Kontaktkraft FK zwischen der Kontaktfläche 4' der wenigstens einen Schleifleiste 3 und dem Fahrdraht 2 eine gegen die Fahrtrichtung X des Fahrzeugs wirkende Reibungskraft FR erzeugt, die aufgrund der wenigstens einen, in einem Hochabstand b unterhalb der Kontaktfläche 4' angeordneten Drehachse D der Gelenkanordnung 7 ein Kippmoment MK auf die wenigstens eine Schleifleiste 3 einprägt. Erfindungsgemäß ist nun die wenigstens eine Drehachse D bezüglich Fahrzeuglängsrichtung X nicht mehr symmetrisch zu der wenigstens einen Schleifleiste 3, sondern derart unsymmetrisch angeordnet, dass die Kontaktkraft FK ein dem Kippmoment MK gegenläufiges Gegenmoment MG auf die wenigstens eine Schleifleiste 3 einprägt. Dazu liegt die Drehachse D um einen Längsabstand a hinter einer Symmetriequerebene S der Schleifleiste 3. Die Lage der wenigstens einen Drehachse D ist dabei so zu der wenigstens einen Schleifleiste 3 bemessen, dass die Summe aus Kippmoment MK und Gegenmoment MG (mit entgegen gesetztem Vorzeichen) gering ausfällt oder verschwindet. Durch das gering gehaltene Gesamtmoment M = MK + MG ≈ 0 wird die Kontaktfläche 4' der wenigstens eine Schleifleiste 3 parallel zum Fahrdraht 2 gehalten, was den Verschleiß des Schleifstückes 4 vergleichmäßigt.

Gemäß FIG 1, 5 und 6 umfasst der erfindungsgemäße Stromabnehmer 2 genau eine Schleifleiste 3, wobei die Gelenkanordnung 7 genau eine Drehachse D aufweist, die relativ zur Schleifleiste 3 bezüglich der Fahrzeughochrichtung Y um einen Hochabstand a unterhalb ihrer Kontaktfläche 4' und bezüglich einer Fahrzeuglängsrichtung X in Fahrtrichtung des Fahrzeugs um einen Längsabstand b hinter einer in der Symmetriequerebene S verlaufenden Wirkungslinie einer Kontaktkraft FK zwischen Fahrdraht 2 und Kontaktfläche 4' angeordnet ist. Die Kontaktkraft FK zwischen der Schleifleiste 3 und dem Fahrdraht 2 wird über eine linienförmige Auflagefläche des Fahrdrahtes 2 auf der Kontaktfläche 4' vermittelt. Jeder auf ein Linienelement der Auflagefläche wirkende Kontaktkraftanteil prägt einen Drehmomentanteil auf die Schleifleiste 3 ein, welche über die Auflagelinie aufintegriert das Kippmoment MK ergeben. Ersatzweise kann eine resultierende Kontaktkraft und deren Wirkungslinie ermittelt werden, die dasselbe Kippmoment einprägt. Die Drehachse D der Gelenkanordnung ist nun so weit hinter dieser Wirkungslinie S angeordnet, dass sich das Reibungskraft-bedingte Kippmoment MK und das Kontaktkraft-bedingte Gegenmoment MG ausgleichen.

Gemäß FIG 2 umfasst der erfindungsgemäße Stromabnehmer 1 zwei in Fahrtrichtung X hintereinander angeordnete Schleifleisten 3a und 3b, wobei die Gelenkanordnung 7 genau eine Drehachse D aufweist, die bezüglich der Fahrzeuglängsrichtung X zwischen den zwei Schleifleisten 3a und 3b angeordnet ist, wobei die Drehachse D relativ zu den Schleifleisten 3a und 3b bezüglich der Fahrzeughochrichtung Z um einen Hochabstand A unterhalb ihrer Kontaktflächen 4' und bezüglich einer Fahrzeuglängsrichtung X um einen Längsabstand B näher an der in Fahrtrichtung des Fahrzeugs hinteren Schleifleiste 3b als an der vorderen Schleifleiste 3a angeordnet ist. Die zwei Schleifleisten 3a und 3b können auf einer gemeinsamen Kontaktwippe in gegenseitig fester Lage angeordnet sein, die über die Gelenkanordnung 7 mit dem Traggestell 6 verbunden ist. Die Kontaktflächen 4' der beiden Schleifleisten 3a und 3b liegen dabei in einer gemeinsamen Kontaktebene. Das Kippmoment MK wird hier durch die Reibungskräfte FR zwischen beiden Schleifleisten 3a und 3b und dem Fahrdraht 2 erzeugt, während das Gegenmoment MG sich aus zwei gegenläufigen Drehmomenten MG1 und MG2 zusammensetzt. Ein erstes Drehmoment MG1 wird durch die auf die vordere Schleifleiste 3a wirkende Kontaktkraft FK erzeugt, während ein zweites gegensinniges Drehmoment MG2 durch die auf die hintere Schleifleiste 3b wirkende Kontaktkraft FK erzeugt wird. Indem die hintere Schleifleiste 3b näher an der Drehachse D liegt als die vordere Schleifleiste 3b, überwiegt das erste Drehmoment MG1 das zweite Drehmoment MG2 und resultiert in Summe in einem Gegenmoment MG, welches das Kippmoment MK ausgleicht.

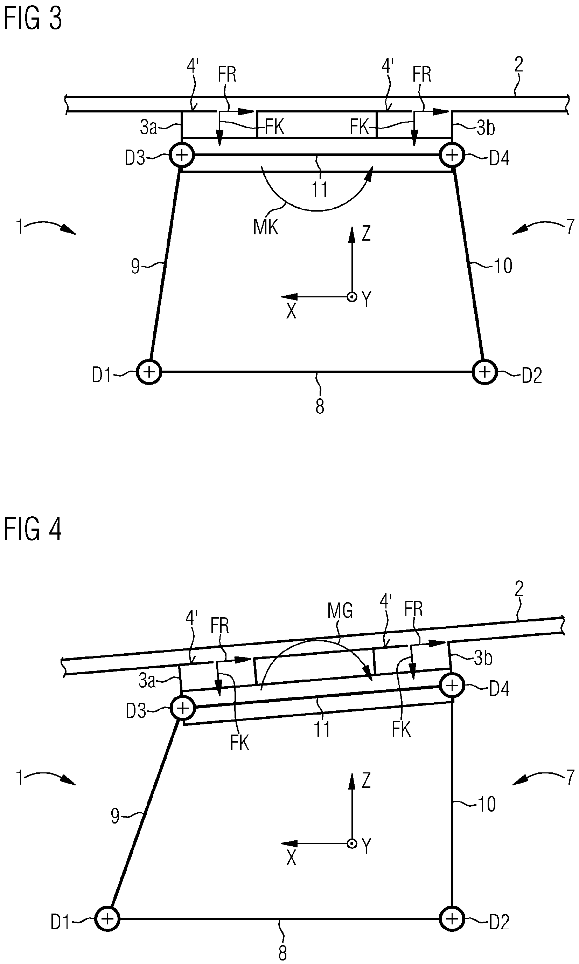

Gemäß FIG 3 und FIG 4 umfasst der erfindungsgemäße Stromabnehmer 1 zwei in Fahrtrichtung X hintereinander angeordnete Schleifleisten 3a und 3b. Dabei weist die Gelenkanordnung 7 ein auf dem Traggestell 6 gelagertes Basiselement 8 mit einer ersten Drehachse D1 und einer in festem Abstand dazu angeordneten zweiten Drehachse D2, ein um die erste Drehachse D1 drehbar an das Basiselement 8 angelenktes, vorderes Schenkelelement 9, ein um die zweite Drehachse D2 drehbar an das Basiselement 8 angelenktes, hinteres Schenkelelement 10, und ein die zwei Schleifleisten 3a und 3b tragendes Tragelement 11 mit einer dritten Drehachse D3 und einer in festem Abstand dazu angeordneten vierten Drehachse D4 auf. Dabei sind das vordere Schenkelelement 9 um die dritte Drehachse D3 und das hintere Schenkelelement 10 um die vierte Drehachse D4 jeweils drehbar an das Tragelement 11 angelenkt. Der Abstand zwischen dritter Drehachse D3 und vierter Drehachse D4 ist kleiner als der Abstand zwischen erster Drehachse D1 und zweiter Drehachse D2. In dieser Ausführungsform bilden das Basiselement 8, das Tragelement 11 und die beiden Schenkelelemente 9 und 10 ein so genanntes Viergelenk. Die auf die Kontaktflächen 4' der Schleifleisten 3a und 3b wirkende Reibungskraft FR bewirkt ein Kippmoment MK auf die Schleifleisten 3a und 3b, welches das vordere Schenkelement 9 um die erste Drehachse D1 und das hintere Schenkelelement 10 um die zweite Drehachse D2 entgegen die Fahrtrichtung X rotieren lässt. Hierdurch neigt sich das Tragelement 11, so dass sich gemäß FIG 4 die vordere Schleifleiste 3a absenkt und die hintere Schleifleiste 3b anhebt, wodurch die vordere Schleifleiste 3a gegenüber der hinteren Schleifleiste 3b kräftemäßig entlastet wird. Die auf vordere Schleifleiste 3a und hintere Schleifleiste 3b unterschiedlich wirkenden Kontaktkräfte FK bewirken nun ein Gegenmoment MG, welches das Tragelement 11 mit den Schleifleisten 3a und 3b versucht, in eine zum Fahrdraht 2 parallele Lage zu drehen. Durch die Anordnung der Schleifleisten 3a und 3b relativ zu den Drehachsen D1 bis D4 und durch geeignete Längenbemessung der Elemente 8 bis 11 des Viergelenks kann ein das Kippmoment MK ausgleichendes Gegenmoment MG erzeugt werden.

## Patentansprüche

1. Stromabnehmer (1) für ein elektrisch oder hybridelektrisch angetriebenes Fahrzeug, insbesondere für ein schweres Nutzfahrzeug, zur Einspeisung von Traktionsenergie während der Fahrt entlang einer Fahrstrecke aus einem Fahrdraht (2) einer längs der Fahrstrecke installierten elektrischen Oberleitungsanlage, umfassend
- wenigstens eine länglich ausgebildete, sich parallel zu einer Fahrzeugquerrichtung (Y) erstreckende Schleifleiste (3), welche bezüglich einer Fahrzeughochrichtung (Z) eine nach oben gewandte Kontaktfläche (4') aufweist,
- ein aufrichtbares Traggestell (6) mit einem Basisgelenk zur Abstützung des Traggestells (6) auf dem Fahrzeug und mit einer Gelenkanordnung (7) mit wenigstens einer parallel zur Fahrzeugquerrichtung (Y) verlaufenden Drehachse (D) zur drehbaren Lagerung der wenigstens einen Schleifleiste (3) auf dem Traggestell (6), und
- eine Hubvorrichtung zum Aufrichten des Traggestells (6), wobei die wenigstens eine Schleifleiste (3) aus einer unteren Ruheposition in eine obere Kontaktposition fährt, und zum Erzeugen einer Kontaktkraft (FK), mit welcher die wenigstens eine Schleifleiste (3) in ihrer Kontaktposition gegen den Fahrdraht (2) zur Ausbildung eines elektrischen Schleifkontakts andrückbar ist,
**dadurch gekennzeichnet,**
- **dass** die wenigstens eine Drehachse (D) relativ zu der wenigstens einen Schleifleiste (3) derart angeordnet ist, dass im Schleifkontakt zum Fahrdraht (2) ein durch eine Reibungskraft (FR) auf die wenigstens eine Schleifleiste (3) eingeprägtes Kippmoment (MK) durch ein gegenläufiges, durch die Kontaktkraft (K) auf die wenigstens eine Schleifleiste (3) eingeprägtes Gegenmoment (MG) ausgleichbar ist.

2. Stromabnehmer (1) nach Anspruch 1,
- umfassend genau eine Schleifleiste (3),
- wobei die Gelenkanordnung (7) genau eine Drehachse (D) aufweist, die relativ zur Schleifleiste (3) bezüglich der Fahrzeughochrichtung (Z) unterhalb ihrer Kontaktfläche (4') und bezüglich einer Fahrzeuglängsrichtung (X) in Fahrtrichtung des Fahrzeugs hinter einer Wirkungslinie (S) einer aus der Kontaktkraft (FK) zwischen Fahrdraht (2) und Kontaktfläche (4') resultierenden Gesamtkraft (F) angeordnet ist.

3. Stromabnehmer (1) nach Anspruch 1,
- umfassend zwei in Fahrtrichtung (X) hintereinander angeordnete Schleifleisten (3a, 3b),
- wobei die Gelenkanordnung (7) genau eine Drehachse (D) aufweist, die bezüglich der Fahrzeuglängsrichtung (X) zwischen den zwei Schleifleisten (3a, 3b) angeordnet ist,
- wobei die Drehachse (D) relativ zu den Schleifleisten (3a, 3b) bezüglich der Fahrzeughochrichtung (Z) unterhalb ihrer Kontaktflächen (4) und bezüglich einer Fahrzeuglängsrichtung (X) näher an der in Fahrtrichtung des Fahrzeugs hinteren Schleifleiste (3b) als an der vorderen Schleifleiste (3a) angeordnet ist.

4. Stromabnehmer (1) nach Anspruch 1,
- umfassend zwei in Fahrtrichtung (X) hintereinander angeordnete Schleifleisten (3a, 3b),
- wobei die Gelenkanordnung (7) ein auf dem Traggestell (6) gelagertes Basiselement (8) mit einer ersten Drehachse (D1) und einer in festem Abstand dazu angeordneten zweiten Drehachse (D2), ein um die erste Drehachse (D1) drehbar an das Basiselement (8) angelenktes, vorderes Schenkelelement (9), ein um die zweite Drehachse (D2) drehbar an das Basiselement (8) angelenktes, hinteres Schenkelelement (10), und ein die zwei Schleifleisten (3a, 3b) tragendes Tragelement (11) mit einer dritten Drehachse (D3) und einer in festem Abstand dazu angeordneten vierten Drehachse (D4) aufweist, wobei das vordere Schenkelelement (9) um die dritte Drehachse (D3) und das hintere Schenkelelement (10) um die vierte Drehachse (D4) jeweils drehbar an das Tragelement (11) angelenkt sind,
- wobei der Abstand zwischen dritter Drehachse (D3) und vierter Drehachse (D4) kleiner ist als der Abstand zwischen erster Drehachse (D1) und zweiter Drehachse (D2).

5. Elektrisch oder hybridelektrisch angetriebenes Fahrzeug, insbesondere schweres Nutzfahrzeug, mit einem Stromabnehmer (1) nach einem der Ansprüche 1 bis 4.
